# EUROPEAN PATENT APPLICATION

(11) **EP 4 177 804 A1**
(43) Date of publication of application: **10.05.2023**
(21) Application number: 20942610.5
(22) Date of filing: 02.07.2020
(51) Int. Cl.: G06Q 10/06

(54) **CONTROL METHOD, INFORMATION PROCESSING DEVICE, AND CONTROL PROGRAM**

(71) Applicant: FUJITSU LIMITED, Kawasaki-shi, Kanagawa 211-8588 (JP)
(72) Inventor: TAKEUCHI, Takuma, Kawasaki-shi, Kanagawa 211-8588 (JP); MORINAGA, Masanobu, Kawasaki-shi, Kanagawa 211-8588 (JP)
(74) Representative: Hoffmann Eitle
(86) International application number: PCT/JP2020/026054
(87) International publication number: WO 2022/003914

(57) **Abstract**

To reduce a load required for recording on a blockchain, a computer executes processing of acquiring, when receiving a request to determine an evaluation value of a target to be evaluated, a calculation formula of the evaluation value recorded in a ledger of a first blockchain network according to an input by a first user, and a first condition of a value of a variable included in the calculation formula recorded in a ledger of a second blockchain network according to an input by a second user, calculating the evaluation value based on the acquired calculation formula of the evaluation value and a value selected from values that satisfy the acquired first condition; and controlling transmission of information that indicates that the selected value is the value of the variable to the second blockchain network.

## Description

### FIELD

The present invention relates to a control method, an information processing device, and a control program.

### BACKGROUND

Systems based on blockchains maintain reliability without a central authority based on verification by a large number of nodes in a blockchain network in principle. On the one hand, in the case of services and systems operated by business enterprises, there are cases where the business enterprises want to control access to information recorded on a blockchain, and in that case, there is a possibility that a different blockchain is operated for each business enterprise.

On the other hand, recently, co-creation business, in which business enterprises cooperate with each other to produce results, rather than each business enterprise operating its own business, is flourishing. In a co-creation business, there is a possibility that a workflow that crosses blockchain networks each operated by a plurality of business enterprises may be configured.

### CITATION LIST

### PATENT DOCUMENT

Patent Document 1: Japanese Laid-open Patent Publication No. 2020-030479

### SUMMARY

### [TECHNICAL PROBLEM]

However, blockchains have a property that the blockchains are not able to be falsified, and in a case where a workflow is configured by a single blockchain as described above, processing performed between business enterprises is not able to be falsified. Meanwhile, the processing of crossing blockchains is a decision made by a business enterprise, including other companies, so the decision may require extremely heavy judgment. Therefore, there is a possibility that a load required for recording on the blockchain (for example, the load of decision-making within the business enterprise regarding items to be recorded on the blockchain) will increase.

Therefore, in one aspect, an object is to reduce the load required for recording on a blockchain.

### [SOLUTION TO PROBLEM]

In one proposal, a computer executes processing of: acquiring, when receiving a request to determine an evaluation value of a target to be evaluated, a calculation formula of the evaluation value recorded in a ledger of a first blockchain network according to an input by a first user, and a first condition of a value of a variable included in the calculation formula recorded in a ledger of a second blockchain network according to an input by a second user; calculating the evaluation value based on the acquired calculation formula of the evaluation value and a value selected from values that satisfy the acquired first condition; and controlling transmission of information that indicates that the selected value is the value of the variable to the second blockchain network.

According to an aspect of the embodiments, a control method executed by a computer, the control method includes acquiring, when receiving a request to determine an evaluation value of a target to be evaluated, a calculation formula of the evaluation value recorded in a ledger of a first blockchain network according to an input by a first user, and a first condition of a value of a variable included in the calculation formula recorded in a ledger of a second blockchain network according to an input by a second user; calculating the evaluation value based on the acquired calculation formula of the evaluation value and a value selected from values that satisfy the acquired first condition; and controlling transmission of information that indicates that the selected value is the value of the variable to the second blockchain network.

### [ADVANTAGEOUS EFFECTS OF INVENTION]

According to one aspect, it is possible to reduce the load required for recording on a blockchain.

### BRIEF DESCRIPTION OF DRAWINGS

FIG. 1 is a diagram illustrating an example of a data pricing workflow;
FIG. 2 is a diagram illustrating a configuration example of a transaction control system 1 according to an embodiment of the present invention;
FIG. 3 is a diagram illustrating a hardware configuration example of a link server 10 according to the embodiment of the present invention;
FIG. 4 is a diagram for describing a first step of the workflow;
FIG. 5 is a diagram for describing a second step of the workflow;
FIG. 6 is a diagram for describing a third step of the workflow;
FIG. 7 is a diagram for describing a fourth step of the workflow;
FIG. 8 is a diagram illustrating a functional configuration example of the transaction control system 1 according to the embodiment of the present invention;
FIG. 9 is a sequence diagram for describing an example of a processing procedure executed in the transaction control system 1;
FIG. 10 is a sequence diagram for describing the example of a processing procedure executed in the transaction control system 1;
FIG. 11 is a sequence diagram for describing the example of a processing procedure executed in the transaction control system 1; and
FIG. 12 is a sequence diagram for describing the example of a processing procedure executed in the transaction control system 1.

### DESCRIPTION OF EMBODIMENTS

Hereinafter, an embodiment of the present invention will be described with reference to the drawings. In the present embodiment, as a problem setting to be examined, a pricing problem related to data will be taken up. The data is, for example, data having economic value, such as big data. In other words, in the present embodiment, an example in which a price is an evaluation value and the data is a target to be evaluated for the evaluation value will be described.

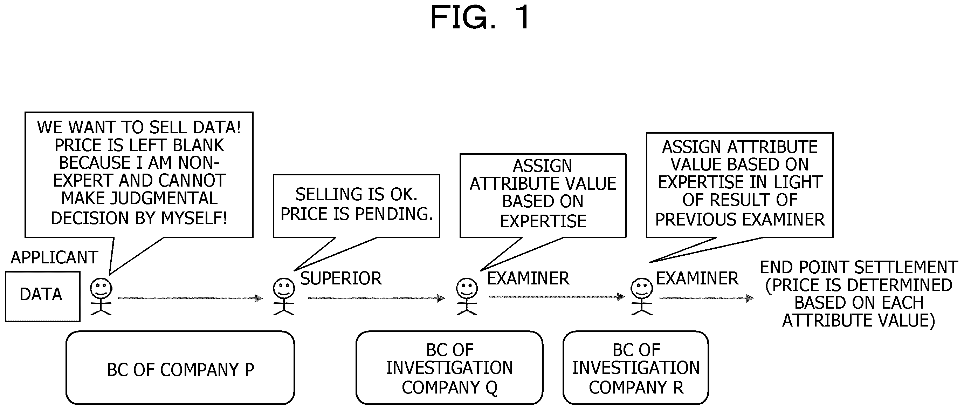

For example, it is assumed that data pricing is performed according to a workflow illustrated in FIG. 1. FIG. 1 illustrates an example in which pricing processing is performed according to a workflow of "an applicant to a direct superior to a technology investigation company Q to a technology investigation company R to an end point settlement".

The applicant of a company P submits an application "to sell data", but the applicant himself is not an expert in a technical field to which the data belongs (technology Q and technology R), and is not familiar with a market price of the data. The direct superior wants to approve the decision to sell data, but he himself is also a non-expert and thus he is not able to verify validity of the price. Therefore, it is assumed that the price of the data is made pending by the company, and is determined depending on opinions of the technology investigation companies as other companies. The technology investigation company determines attribute values that price the data based on their expertise. In the end point settlement, the final price is determined based on the attribute values. Note that it is assumed that a determined item by each company is recorded on a company-specific blockchain (BC). Furthermore, a person who determines the attribute values in each technology investigation company is referred to as an "examiner" for convenience.

Consider a situation in which such transactions sequentially flow. The following are assumed as constraints.
(1) There is a wide range of attribute value ratings given to the examiner of each technology investigation company. In other words, dispersion of the attribute values given to a plurality of transactions is not zero. For example, it is not permissible for an examiner to give a high rating to all the transactions. During a certain period of time, it is necessary to give a wide range of ratings from high to low ratings.
(2) Each examiner's attribute value rating may depend on decisions of examiners in an earlier stage. For example, it is an image in which screening is performed by document screening in first screening, and detailed screening is conducted in technical screening in second screening.

Note that such a workflow is applicable to cases other than data trading. For example, the workflow may be applied to an electric power trading profit distribution system in an electric power company.

A possible approach for the above-described workflow will be described.

### [Approach 1: Blockchain link]

As a method, it is assumed that an evaluation result is assigned point by point each time the workflow is processed using a method of linking between different blockchain networks. As an example of the method of linking between different blockchain networks, there is a connection chain disclosed in "Shingo Fujimoto, Yoshiki Higashikado, Takuma Takeuchi "ConnectionChain: the Secure Interworking of Blockchains (2019)"<URL:ieeexplore.ieee.org>".

A problem point for simply using a connection chain is that the degree of freedom in attribute values to be assigned becomes lower in a more subsequent stage of the workflow because an attribute value is assigned point by point, including a middle of the process, and the attribute value is recorded in the blockchain. In the case of the example of data pricing, there is a drawback that the attribute values that the examiner can finally assign are limited if the attribute values are determined at the point of time of the middle of the process. Therefore, assignment of the attribute values in the middle is desired to be made pending.

### [Approach 2: Blockchain link + pending state assignment]

As an improvement of approach 1, the blockchain linking method is used in a similar way to approach 1, and a variable indicating that an attribute value is not assigned to a transaction in the middle of the process (to be in the pending state) is recorded in the blockchain, and the attribute values are assigned to the variables in the pending state in a batch in the transaction at the final point of time (end point settlement). As an advantage of this method, the degree of freedom in attribute values increases at the point of time of the final transaction.

However, assigning the attribute values to the variables in the pending state in each blockchain retroactively from the final transaction has a disadvantage of reducing processing performance in many cases. Since an approval request is sent to each blockchain in turn, a processing time increases in proportion to the number of blockchains to be linked (the number of technology investigation companies). This is because the decision of the examiner depends on the decision of the previous examiner, so the approval requests must be made in turn.

Depending on the blockchain, it may take 10 minutes or more for the transaction to be approved after issued. It seems that it will take one hour depending on a type of the application (it may take a day or a week if it is important processing) assuming that confirmation processing by the examiner is inherently manually performed. In that case, for example, in a case where there are four blockchains other than the blockchain at the final point of time, the confirmation processing will be performed for each blockchain, and the time required will be four hours. This is a disadvantage that becomes conspicuous when each processing in the workflow is important or when the number of connected blockchains increases.

Therefore, in the present embodiment, regarding a dispersed workflow that allows recording of a pending state on a blockchain, an example of simultaneously satisfying "increasing the degree of freedom in assigning attribute values in a transaction at the final point of time" and "shortening the processing time of the transaction at the final point of time" will be described. By doing so, it is possible to reduce a load required for recording on the blockchain at each stage of the workflow.

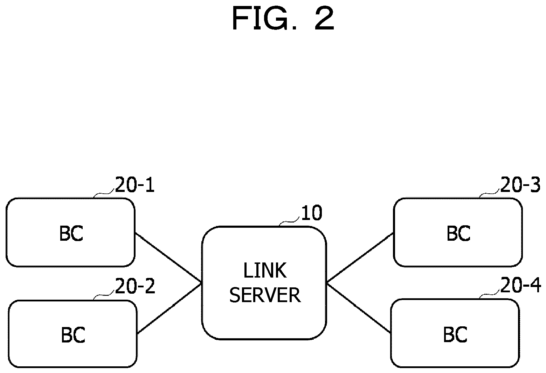

FIG. 2 is a diagram illustrating a configuration example of a transaction control system 1 according to the embodiment of the present invention. As illustrated in FIG. 2, the transaction control system 1 includes a plurality of blockchain networks (hereinafter referred to as "BCs 20") and a link server 10. BCs 20 such as a BC 20-1 to a BC 20-4 are each connected to the link server 10 via a network such as the Internet. Note that functions of the link server 10 may be implemented by a smart contract in any BC 20.

Each BC 20 is a blockchain network operated by the company P, the technology investigation company Q, the technology investigation company P, or an organization that executes an end point settlement (hereinafter referred to as "end point organization") illustrated in FIG. 1. For example, the BC 20-1 is the blockchain network of the company P, the BC 20-2 is the blockchain network of the technology investigation company Q, the BC 20-3 is the blockchain network of the technology investigation company R, and the BC 20-4 is the blockchain network of the end point organization.

The link server 10 is one or more computers (information processing devices) that execute link processing for causing processing in each BC 20 to be in a pending state.

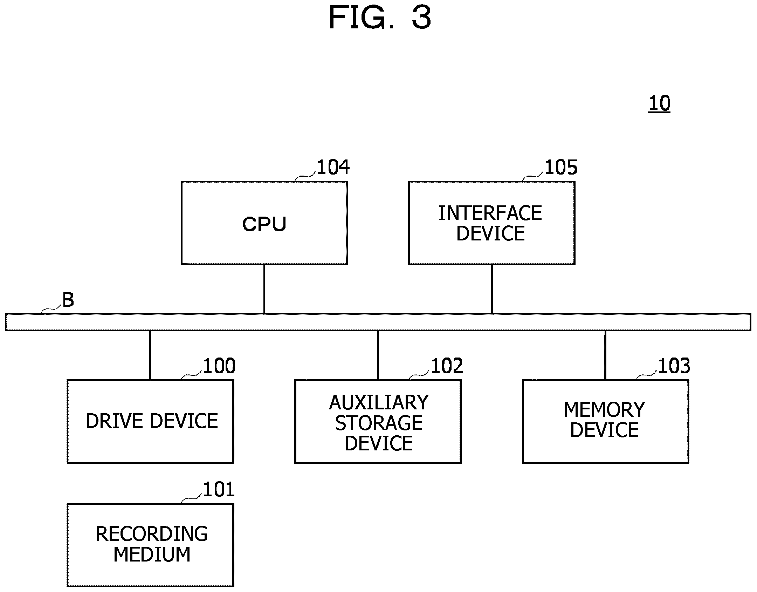

FIG. 3 is a diagram illustrating a hardware configuration example of the link server 10 according to the embodiment of the present invention. The link server 10 in FIG. 3 includes a drive device 100, an auxiliary storage device 102, a memory device 103, a CPU 104, an interface device 105, and the like, which are each mutually connected by a bus B.

A program that implements processing in the link server 10 is provided by a recording medium 101. When the recording medium 101 recording the program is set in the drive device 100, the program is installed in the auxiliary storage device 102 from the recording medium 101 via the drive device 100. Note that the program is not necessarily installed from the recording medium 101, and the program may be downloaded from another computer via the network. The auxiliary storage device 102 stores the installed program, and also stores files, data, and the like that are needed.

The memory device 103 reads the program from the auxiliary storage device 102 and stores the program when an instruction to activate the program is issued. The CPU 104 executes a function related to the link server 10 in accordance with the program stored in the memory device 103. The interface device 105 is used as an interface for being connected to the network.

Note that examples of the recording medium 101 include a portable recording medium such as a compact disc read only memory (CD-ROM), a digital versatile disc (DVD), or a universal serial bus (USB) memory. Furthermore, examples of the auxiliary storage device 102 include a hard disk drive (HDD), a flash memory, or the like. Both the recording medium 101 and the auxiliary storage device 102 correspond to a computer-readable recording medium.

Note that each node (information processing device) of each BC 20 may also have a hardware configuration as illustrated in FIG. 3.

Next, an outline of a processing procedure of the workflow executed in the transaction control system 1 will be described by dividing the processing procedure into four steps (first step to fourth step).

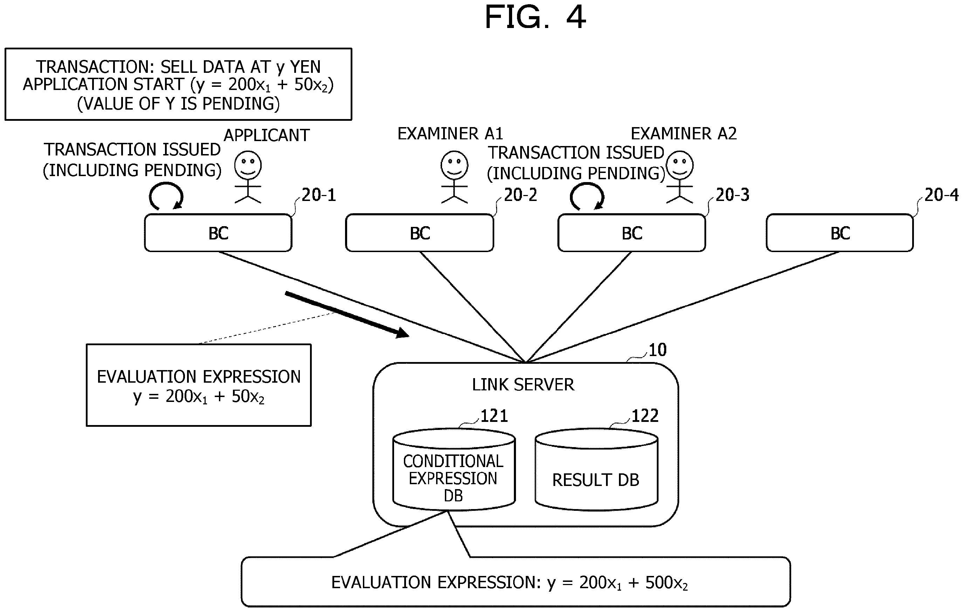

FIG. 4 is a diagram for describing the first step of the workflow. In the first step, the link server 10 acquires an evaluation expression for the pricing (a calculation formula for an evaluation value) and stores the evaluation expression in a conditional expression DB 121 in response to issuance of a data pricing application transaction in the BC 20-1. Note that, in FIG. 4, the evaluation expression is y = 200x₁ + 50x₂. y is a price of the data. x₁ is an attribute (variable) whose value is determined by an examiner A1 of the technology investigation company Q among attributes (variables) of the price. x₂ is an attribute (variable) whose value is determined by an examiner A2 of the technology investigation company R among the attributes (variables) of the price. Note that the evaluation expression is determined by the applicant or company P, for example.

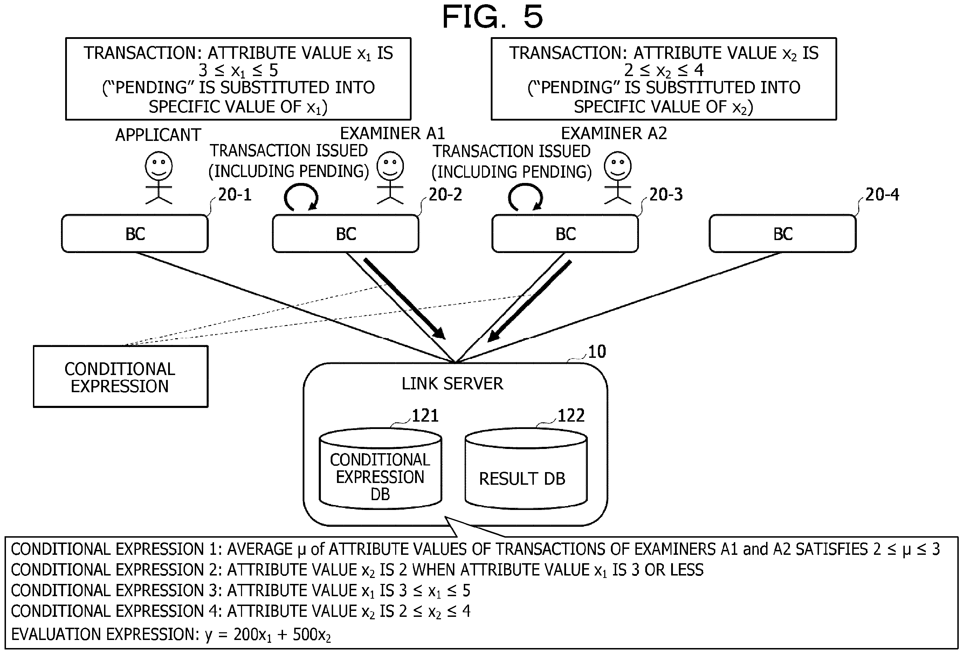

FIG. 5 is a diagram for describing the second step of the workflow. In the second step, when a transaction in the pending state is performed on the BC 20 of each technology investigation company, the link server 10 acquires the conditional expression from each BC 20 and stores the conditional expression in the conditional expression DB 121. At each such BC 20, transactions including one in the pending state are issued for x₁ or x₂.

Here, the conditional expression is an expression indicating a condition regarding the variable (x₁ or x₂) of the evaluation expression. In FIG. 5, illustrated is an example in which the examiner A1 inputs 3 ≤ x₁ ≤ 5 and the examiner A2 inputs 2 ≤ x₂ ≤ 4. In other words, in the second step, each variable is not uniquely determined, but is put in the pending state by the conditional expression.

In FIG. 5, 3 ≤ x₁ ≤ 5 is stored in the conditional expression DB 121 as a conditional expression 3. 2 ≤ x₂ ≤ 4 is stored in the conditional expression DB 121 as a conditional expression 4. Note that a conditional expression 1 (an average µ of the attribute values of the transactions of the examiners A1 and A2 satisfies 2 ≤ µ ≤ 3) and a conditional expression 2 (in a case where the attribute value x₁ is 3 or less, the attribute value x₂ is 2) are examples of conditional expressions registered in the conditional expression DB 121 in advance. The conditional expressions 1 and 2 are conditional expressions commonly applied to all of workflows (hereinafter referred to as "predetermined conditional expressions").

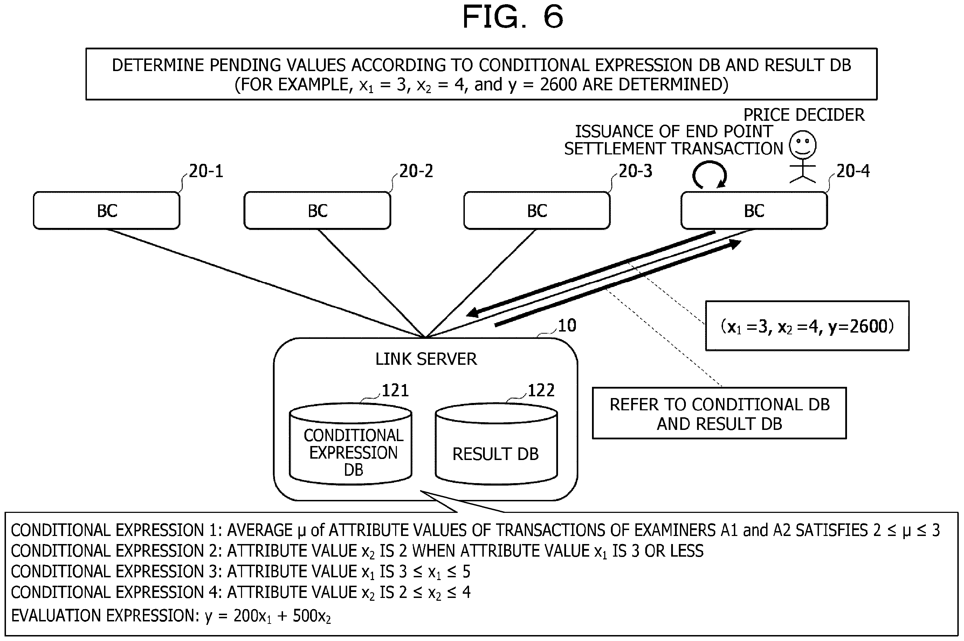

FIG. 6 is a diagram for describing the third step of the workflow. In the third step, the value of the variable in the pending state are determined in the BC 20-4 of the end point organization. Specifically, the conditional expression DB 121 and a result DB 122 are referenced, and the values of the variables (x₁ and x₂) are determined so as to satisfy all the conditional expressions stored in the conditional expression DB 121, so that a price y is determined and an end point settlement transaction is issued. The determined price and values of the variables are recorded in a ledger of the BC 20-4 in response to the issuance of the end point settlement transaction. The price and the values of the variables are also transmitted to the link server 10. In the example in FIG. 6, illustrated is an example determined as x₁ = 3, x₂ = 4, and y = 2600. Note that the result DB 122 is a database that stores histories of past prices and variable values. The reason why reference to the result DB 122 is necessary is that results of past transactions are necessary in order to satisfy the conditional expression 1.

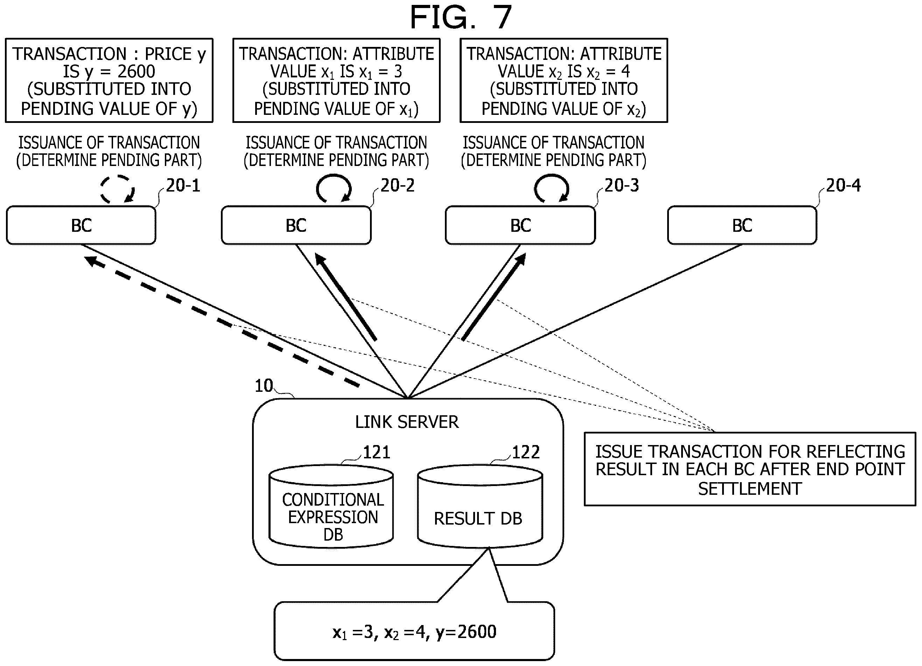

FIG. 7 is a diagram for describing the fourth step of the workflow. In the fourth step after the end point settlement, the link server 10 issues a transaction indicating a substitution request of the value (x₁ or x₂) to the variable in the pending state in order to reflect the result of the end point settlement transaction stored in the result DB 122 to the BC 20-2 and the BC 20-3 and transmits the value of each variable to the BC 20-2 and the BC 20-3, and also stores the results (the values of y, x₁, and x₂) of the end point settlement transaction to the result DB 122. Each BC 20 updates the value of each variable in the pending state with the value of the result of the end point settlement transaction. Note that, as indicated by the dashed line in FIG. 7, the value of variable y may be transmitted to the BC 20-1 in response to the issuance of the transaction indicating the substitution request. In this case, the value may be substituted into the variable y in the BC 20-1.

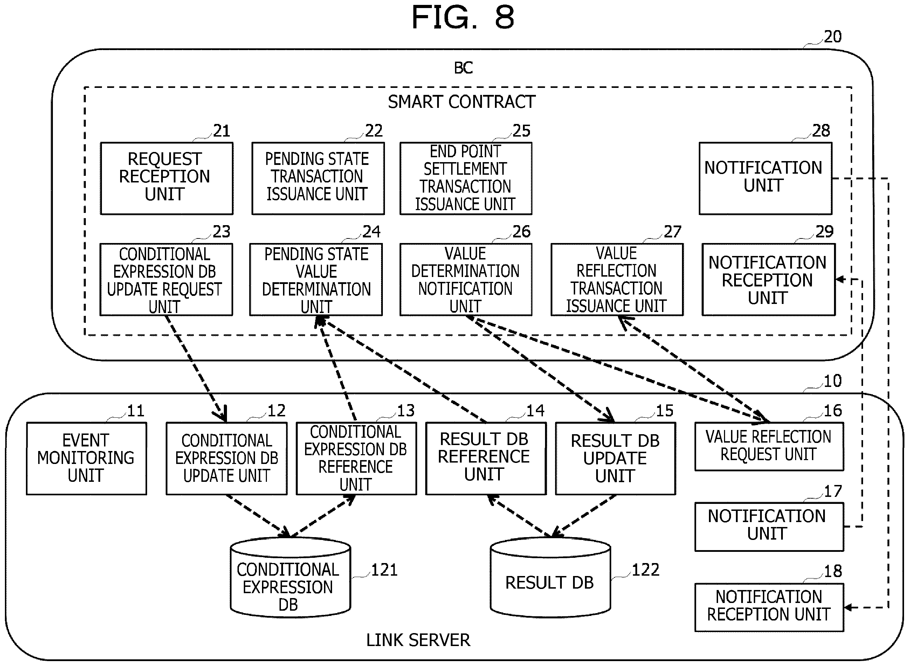

To make the first step to the fourth step and the like executable, the transaction control system 1 (each BC 20 and the link server 10) has a functional configuration as illustrated in FIG. 8.

FIG. 8 is a diagram illustrating a functional configuration example of the transaction control system 1 according to the embodiment of the present invention. As illustrated in FIG. 8, (each node of) each BC 20 includes a request reception unit 21, a pending state transaction issuance unit 22, a conditional expression DB update request unit 23, a pending state value determination unit 24, an end point settlement transaction issuance unit 25, a value determination notification unit 26, a value reflection transaction issuance unit 27, a notification unit 28, a notification reception unit 29, and the like. Each of these units is implemented by processing that one or more programs (for example, smart contract) installed in the BC 20 cause a CPU of the node that constitutes the BC 20 to execute. Note that the end point settlement transaction issuance unit 25, the value determination notification unit 26, and the value reflection transaction issuance unit 27 may not be included in the BCs 20 other than the BC 20-4 that performs the end point settlement transaction.

The request reception unit 21 receives requests from users (the applicant, the examiner, and the like).

The pending state transaction issuance unit 22 issues a transaction (hereinafter referred to as "pending transaction") that is a variable indicating that content to be recorded in the ledger of the BC 20 as a result of the transaction is in the pending state. In the BC 20-1, the application for pricing corresponds to the pending transaction. In the BC 20-2 and the BC 20-3, a transaction including the conditional expression corresponds to the pending transaction.

The conditional expression DB update request unit 23 transmits a registration request for information (evaluation expression or conditional expression) included in the pending transaction issued by the BC 20 to the link server 10.

The pending state value determination unit 24 determines the value of the variable in the pending state based on the conditional expressions stored in the conditional expression DB 121, the past transaction results stored in the result DB 122, and the like.

The end point settlement transaction issuance unit 25 issues the end point settlement transaction.

The value reflection transaction issuance unit 27 issues an event or transaction for reflecting the value of the variable in the pending state.

The notification unit 28 transmits a notification to the link server 10. The notification reception unit 29 receives the notification from the link server 10.

Meanwhile, the link server 10 includes an event monitoring unit 11, a conditional expression DB update unit 12, a conditional expression DB reference unit 13, a result DB reference unit 14, a result DB update unit 15, a value reflection request unit 16, a notification unit 17, and a notification reception unit 18, and the like. Each of those units is implemented by processing that one or more programs installed in the link server 10 cause the CPU 104 to execute. The link server 10 also uses databases (storage units) such as the conditional expression DB 121 and the result DB 122. Each of these databases can be implemented using, for example, the auxiliary storage device 102, a storage device that can be connected to the link server 10 via a network, or the like.

The event monitoring unit 11 monitors issuance of events in each BC 20.

The conditional expression DB update unit 12 updates the conditional expression DB 121 by registering the evaluation expression or the conditional expression in the conditional expression DB 121 in response to an event issued by the conditional expression DB update request unit 23.

The conditional expression DB reference unit 13 transmits the conditional expression stored in the conditional expression DB 121 to the pending state value determination unit 24.

The result DB reference unit 14 transmits a past transaction result stored in the result DB 122 to the pending state value determination unit 24.

The result DB update unit 15 updates the result DB 122 by registering the value determined by the pending state value determination unit 24 in the result DB 122.

The value reflection request unit 16 requests each BC 20 to reflect the value determined by the pending state value determination unit 24 for the variable in the pending state.

The notification unit 17 transmits a notification to each BC 20. The notification reception unit 18 receives the notification from each BC 20.

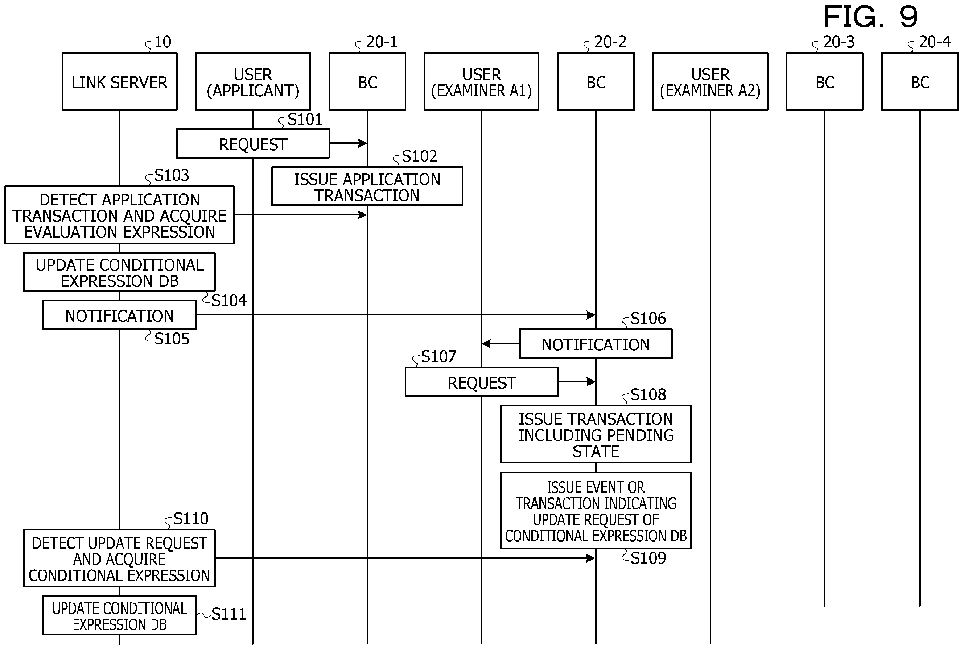

Hereinafter, a processing procedure executed in the transaction control system 1 will be described. FIGs. 9 to 12 are sequence diagrams for describing an example of a processing procedure executed in the transaction control system 1.

In step S101, the request reception unit 21 of the BC 20-1 receives an input of a request regarding the data pricing application from the applicant. The request includes, for example, the evaluation expression (y = 200x₁ + 50x₂) described above.

Next, the pending state transaction issuance unit 22 of the BC 20-1 issues the application transaction corresponding to the request within the BC 20-1 (S102). As a result, the evaluation expression included in the request is recorded in the ledger of each node in the BC 20-1.

When detecting the issuance of the application transaction, the event monitoring unit 11 of the link server 10 acquires the evaluation expression recorded in the ledger of the BC 20-1 in the application transaction (S103). Next, the conditional expression DB update unit 12 updates the conditional expression DB 121 by recording the evaluation expression in the conditional expression DB 121 (S104). Next, the notification unit 17 of the link server 10 transmits a notification of occurrence of the workflow to the BC 20-2 (S105).

When the notification reception unit 29 of the BC 20-2 receives the notification, the notification unit 28 of the BC 20-2 notifies the examiner A1 of the occurrence of the workflow (S106). For example, the notification unit 28 of the BC 20-2 may notify the application linked with the smart contract of the BC 20-2 of the occurrence of the workflow, and the application may notify the examiner A1 of the occurrence of the workflow via a predetermined user interface.

The examiner A1 determines the conditional expression for the value of the variable (in the above example, x₁) to be examined by the examiner A1 of the evaluation expression for the workflow in response to the notification of the occurrence of the workflow. Next, the request reception unit 21 of the BC 20-2 receives the input of the request including the conditional expression (S107). Note that the examiner A1 is assumed to have prior knowledge of the variable to be examined by him/herself of the evaluation expression. The pending state transaction issuance unit 22 of the BC 20-2 issues a transaction for causing the value of the variable to be in the pending state in the BC 20-2 in response to the input of the request (S108). As a result, the conditional expression is recorded in the ledger of each node of the BC 20-2. Next, the conditional expression DB update request unit 23 issues an event or a transaction indicating an update request for the conditional expression DB 121 (S109).

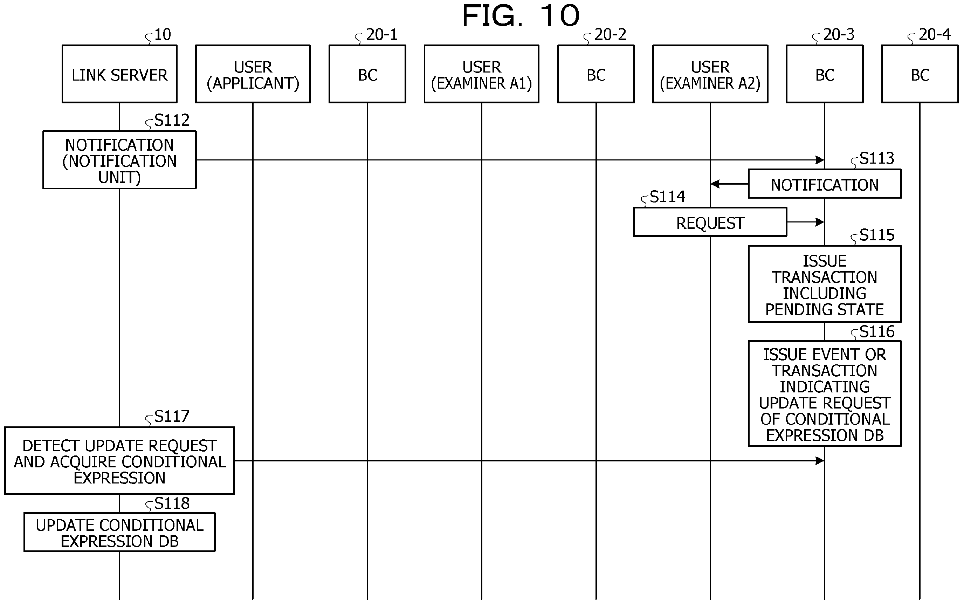

When detecting the issuance of the event or the transaction, the event monitoring unit 11 of the link server 10 acquires the conditional expression recorded in the ledger of the BC 20-2 (S110). Next, the conditional expression DB update unit 12 updates the conditional expression DB 121 by recording the conditional expression in the conditional expression DB 121 (S111). Next, the notification unit 17 of the link server 10 transmits the notification of occurrence of the workflow to the BC 20-3 (S112 of FIG. 10).

In steps S113 to S118, a processing procedure similar to steps S105 to Sill in FIG. 9 is executed. Note that the user in steps S113 to S118 is the examiner A2, the BC 20 is the BC 20-3, and the conditional expression is the conditional expression of the value of the variable (x₂ in the above example) to be examined by the examiner A2.

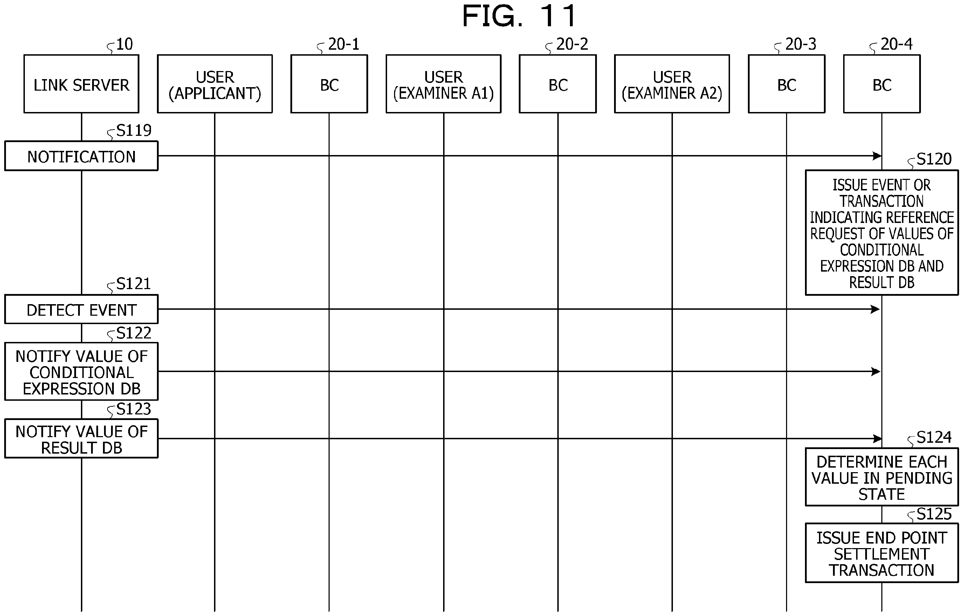

Next, the notification unit 17 of the link server 10 transmits the notification of occurrence of the workflow to the BC 20-4 (S119 of FIG. 11). When the notification reception unit 29 of the BC 20-4 receives the notification, the pending state value determination unit 24 of the BC 20-4 issues an event or a transaction indicating a reference request for the values of the conditional expression DB 121 and result DB 122 in the BC 20-4 (S120). As a result, information regarding the transaction is recorded in the ledger of the BC 20-4.

When the event monitoring unit 11 of the link server 10 detects the issuance of the event or the transaction (S121), the conditional expression DB reference unit 13 of the link server 10 acquires the values of the evaluation expression for the current workflow, the conditional expression of each variable of the evaluation expression, the predetermined conditional expression, and the like from the result DB 122, and notifies the acquired values to the pending state value determination unit 24 of the BC 20-4 (S122). Furthermore, the result DB reference unit 14 of the link server 10 acquires the value of each variable related to the past workflows, the values including the history of the value (in other words, the price) of the evaluation expression from the result DB 122, and notifies the acquired values to the pending state value determination unit 24 of the BC 20-4 (S123). As a result, the pending state value determination unit 24 of the BC 20-4 acquires the evaluation expression, the conditional expression of each variable of the evaluation expression, the predetermined conditional expression, the value of each variable related to the past workflows, and the values including the history of the value (in other words, the price) of the evaluation expression.

The pending state value determination unit 24 of the BC 20-4 determines (calculates) each value in the pending state based on each value acquired in steps S122 and S123 (S124). In other words, the pending state value determination unit 24 calculates the price (evaluation value) by substituting the value selected from the values that satisfy the conditional expression and the predetermined conditional expression for each variable into the evaluation expression. Next, the end point settlement transaction issuance unit 25 of the BC 20-4 issues the end point settlement transaction (S125). The determined price and the value of each variable are recorded in the ledger of the BC 20-4 in response to the issuance of the end point settlement transaction.

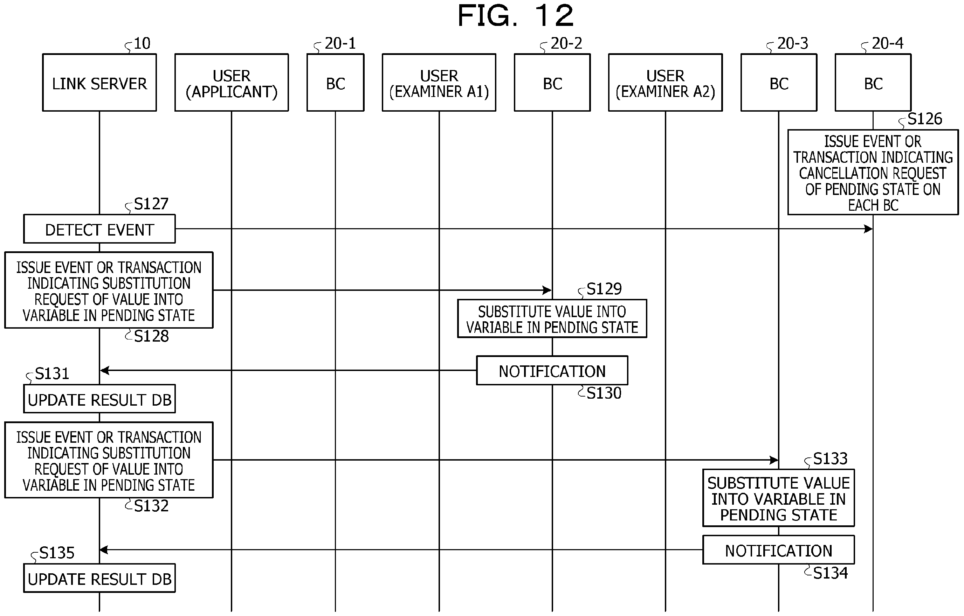

Next, the value determination notification unit 26 of the BC 20-4 issues an event or a transaction indicating a cancellation request of the pending state on each BC 20 (S126 in FIG. 12). Note that step S127 and subsequent steps are executed in response to the issuance of the event or transaction. Therefore, the issuance of the event or the transaction corresponds to control of transmission of the value of each variable (or the calculated price) selected in the BC 20-4 to the BC 20-2 and the BC 20-3 (or BC 20-1).

When detecting the issuance of the event or the transaction (S127), the event monitoring unit 11 of the link server 10 acquires the calculated price and the value of each variable selected in the BC 20-4. Next, the value reflection request unit 16 of the link server 10 issues an event or a transaction indicating the substitution request of the value to the variable in the pending state to the BC 20-2 (S128). Along with the issuance of the event or the transaction, the information indicating the value selected for the variable (x₁) in the pending state in the BC 20-2 is transmitted to the BC 20-2.

When receiving the information, the value reflection transaction issuance unit 27 of the BC 20-2 substitutes the value indicated by the information into the variable (x₁) in the pending state (S129). As a result, the value of the variable is recorded (reflected) in the ledger of the BC 20-2. Next, the notification unit 28 of the BC 20-2 transmits an end notification of reflection of the value to the variable in the pending state to the link server 10 (S130). When the notification reception unit 18 of the link server 10 receives the end notification, the result DB update unit 15 of the link server 10 records the value of the variable in the result DB 122 (S131).

In subsequent steps S132 to S135, a processing procedure similar to steps S128 to S131 is executed for the BC 20-3. As a result, the value of the variable (x₂) in the pending state in the BC 20-3 is recorded in the ledger of the BC 20-3, and the value of the variable is recorded in the result DB 122.

Note that, for the BC 20-1 as well, a processing procedure similar to steps S128 to S131 may be executed. In that case, the value of the price y may be recorded in the ledger of the BC 20-1.

As described above, according to the present embodiment, it is possible to increase the degree of freedom in assigning attribute values in the transaction at the final point of time (end point settlement transaction) for the workflow including the pending state, which cross a plurality of blockchains. In other words, since the values are in the pending state except for the conditional expression in the middle of transactions, the degree of freedom in the end point settlement transaction can be increased as compared with approach 1. Furthermore, according to the present embodiment, since it is sufficient to exchange data between the BC 20-4 related to the transaction and the link server 10 in the end point settlement transaction, it is possible to shorten the time compared to approach 2. As a result, it is possible to reduce the load required for recording on the blockchain at each stage of the workflow.

Note that, in the present embodiment, the applicant is an example of a first user. The examiner is an example of a second user. The BC 20-1 is an example of a first blockchain network. The BC 20-2 or the BC 20-3 is an example of a second blockchain network.

Although the embodiment of the present invention have been described in detail above, the embodiments are not limited thereto, and various modifications and alternations may be made within the scope of the gist of the present invention described in the claims.

### REFERENCE SIGNS LIST

1Transaction control system
10Link server
11Event monitoring unit
12Conditional expression DB update unit
13Conditional expression DB reference unit
14Result DB reference unit
15Result DB update unit
16Value reflection request unit
17Notification unit
18Notification reception unit
20BC
21Request reception unit
22Pending state transaction issuance unit
23Conditional expression DB update request unit
24Pending state value determination unit
25End point settlement transaction issuance unit
26Value determination notification unit
27Value reflection transaction issuance unit
28Notification unit
29Notification reception unit
100Drive device
101Recording medium
102Auxiliary storage device
103Memory device
104CPU
105Interface device
121Conditional expression DB
122Result DB
BBus

## Claims

1. A control method executed by a computer, the control method comprising:
acquiring, when receiving a request to determine an evaluation value of a target to be evaluated, a calculation formula of the evaluation value recorded in a ledger of a first blockchain network according to an input by a first user, and a first condition of a value of a variable included in the calculation formula recorded in a ledger of a second blockchain network according to an input by a second user;
calculating the evaluation value based on the acquired calculation formula of the evaluation value and a value selected from values that satisfy the acquired first condition; and
controlling transmission of information that indicates that the selected value is the value of the variable to the second blockchain network.

2. The control method according to claim 1, further comprising
controlling transmission of information that indicates that the calculated evaluation value is the evaluation value of the target to be evaluated to the first blockchain network.

3. The control method according to claim 1 or 2, further comprising
acquiring a second condition to be commonly applied to a plurality of the requests, wherein
the calculating includes calculating the evaluation value based on a value selected from the values that also satisfy the acquired second condition.

4. An information processing device comprising:
an acquisition unit configured to acquire, when receiving a request to determine an evaluation value of a target to be evaluated, a calculation formula of the evaluation value recorded in a ledger of a first blockchain network according to an input by a first user, and a first condition of a value of a variable included in the calculation formula recorded in a ledger of a second blockchain network according to an input by a second user;
a calculation unit configured to calculate the evaluation value based on the acquired calculation formula of the evaluation value and a value selected from values that satisfy the acquired first condition; and
a control unit configured to control transmission of information that indicates that the selected value is the value of the variable to the second blockchain network.

5. The information processing device according to claim 4, wherein a computer executes processing of:
controlling, by the control unit, transmission of information that indicates that the calculated evaluation value is the evaluation value of the target to be evaluated to the first blockchain network.

6. The information processing device according to claim 4 or 5, wherein
the acquisition unit acquires a second condition to be commonly applied to a plurality of the requests, and
the calculation unit further calculates the evaluation value based on a value selected from the values that also satisfy the acquired second condition.

7. A control program that causes a computer to execute a process, the process comprising:
acquiring, when receiving a request to determine an evaluation value of a target to be evaluated, a calculation formula of the evaluation value recorded in a ledger of a first blockchain network according to an input by a first user, and a first condition of a value of a variable included in the calculation formula recorded in a ledger of a second blockchain network according to an input by a second user;
calculating the evaluation value based on the acquired calculation formula of the evaluation value and a value selected from values that satisfy the acquired first condition; and
controlling transmission of information that indicates that the selected value is the value of the variable to the second blockchain network.

8. The control method according to claim 7, wherein the process further comprising
controlling transmission of information that indicates that the calculated evaluation value is the evaluation value of the target to be evaluated to the first blockchain network.

9. The control method according to claim 7 or 8, wherein the process further comprising
acquiring a second condition to be commonly applied to a plurality of the requests, and
the calculating includes calculating the evaluation value based on a value selected from the values that also satisfy the acquired second condition.
